# EUROPÄISCHE PATENTSCHRIFT

(11) **EP 0 437 260 B1**
(45) Veröffentlichungstag und Bekanntmachung des Hinweises auf die Patenterteilung: **29.06.1994**
(21) Anmeldenummer: 91100258.2
(22) Anmeldetag: 10.01.1991
(51) Int. Cl.: E04F 17/02, B28B 21/92

(54) **Keramisches Innenrohr zum Auskleiden eines Schornsteins.**
Ceramic sleeve for coating a chimney.
Chemise en céramique pour intérieur de cheminée.

(30) Priorität: 11.01.1990 DE 4000654
(43) Veröffentlichungstag der Anmeldung: 17.07.1991
(73) Patentinhaber: TONA TONWERKE SCHMITZ GMBH, D-53894 Mechernich (DE)
(72) Erfinder: Kihm, Herbert, Dipl.-Ing., W-5309 Meckenheim (DE)
(74) Vertreter: Hennicke, Albrecht, Dipl.-Ing.

(56) Entgegenhaltungen:
- CH-A- 610 234
- DE-A- 2 424 654
- DE-C- 3 504 446
- DE-U- 8 606 323

## Beschreibung

Die Erfindung betrifft ein keramisches Innenrohr zum Auskleiden eines Schornsteines mit einer säurebeständigen Innenfläche, das aus mehreren Rohrabschnitten besteht, die am Schornsteinkopf einer auf den anderen gesetzt, an ihren Stoßfugen mit je einer, die jeweilige Stoßfuge zwischen zwei Rohrabschnitten überdeckenden Manschette versehen und vom Schornsteinkopf aus abschnittsweise in den Schornstein abgelassen werden.

Es ist bekannt (DE-A-2 424 654) in bestehende Schornsteine, an die neue Heizungsanlagen angeschlossen werden sollen, oder auch bei neu errichteten Schornsteinen ein Innenrohr einzubauen, das aus relativ kurzen Rohrabschnitten zusammengesetzt und von oben her ins Innere des Schornsteines abgelassen wird. Hierbei werden die Stoßfugen zwischen den einzelnen Rohrabschnitten abgedichtet und durch Querriegel abgedeckt.

Insbesondere bei nachträglichem Einbau von Keramikrohren ist es schwierig, an den Stoßstellen der Rohrabschnitte eine zuverlässige Abdichtung zu erreichen, da sich Keramikrohre beim Brennen leicht verziehen und die Enden der Rohrabschnitte beim Zusammenbau nicht genau parallel zueinander sind. Es entstehen dann keilförmige Fugen, die zwar mit einem dazwischen angeordneten Mörtel bis zu einem gewissen Grade ausgeglichen werden können, die Mörtelschicht hat aber dann über den Umfang der Stoßfuge eine ungleichmäßige Dicke und dehnt sich bei Erwärmung unterschiedlich aus, so daß an diesen Stellen leicht feine Risse in der Fuge oder in ihrer Anschlußfläche zum Rohrende auftreten können. In diese Fugen kann dann das aggressive, saure Abgaskondensat eindringen und sein Zerstörungswerk beginnen.

Zum Verbinden von Schornsteinrohrabschnitten aus keramischem Material sind auch Klemmringe bekannt (DE-U-8 606 323), welche die Enden der Rohrschüsse in Axialrichtung zusammenziehen und zwischen den Rohrenden angeordnete Dichtungsringe aus elastischem Material unter Druck setzen, um ihre Dichtwirkung zu aktivieren. Diese bekannten Klemmringe mit Gummidichtungen sind aber nur bei schmalen Fugen verwendbar, und Gummidichtringe gewährleisten keine einwandfreie Abdichtung von keilförmigen Fugen.

Es ist auch bekannt, zum Abführen von kondensatbildenden Abgasen mit niedriger Temperatur in einen Schornstein ein Innenrohr aus Silikatglas einzuziehen, dessen einzelne Rohrabschnitte durch eine Manschette miteinander verbunden werden, welche die Enden aufeinanderfolgender Rohrabschnitte umschließt und auf dem Umfang der Rohrenden festgespannt wird. Da die Glasrohre dünnwandig und bruchempfindlich sind, muß zwischen dem Klemmring aus Blech und den Enden der Glasrohre ein Polsterring aus Kunststoff eingelegt werden, der in Axialrichtung gewellt ist und zugleich die Funktion einer Labyrinthdichtung übernehmen soll. Dieses bekannte Innenrohr aus Glas ist sehr teuer in der Herstellung, sehr bruchgefährdet und es bestehen starke Zweifel, ob die zwischen Klemmring und Glasrohr angeordneten Dichtungsmanschetten dem Säureangriff des Abgaskondensatzes über Jahre hinweg standhalten. Der Einbau der gläsernen Rohre vom Schornsteinkopf aus birgt auch erhebliche Risiken.

Aufgabe der Erfindung ist es, auch nicht ganz maßhaltige und beim Herstellungsprozeß leicht verformte Keramikrohre an den Stoßstellen zuverlässig so zu verbinden, daß die Fugen zwischen benachbarten Rohrabschnitten über Jahrzehnte hinweg dicht bleiben.

Diese Aufgabe wird mit der Erfindung dadurch gelöst, daß die Rohrabschnitte nach dem Brennen an ihren Enden planparallel abgeschnitten und mit einer im Abstand vom Rohrende angeordneten Umfangsrille versehen werden, in die ein Klemmring mit nach innen gerichteten, in axialem Abstand voneinander angeordneten Vorsprüngen eingreift und daß zwischen den gegeneinander stossenden Enden aufeinanderfolgender Rohrabschnitte ein säurebeständiges, erhärtendes Klebmittel angeordnet wird.

Diese Ausgestaltung des Innenrohres hat den Vorteil, daß auch lange Rohrabschnitte aus Keramik, die eine "leichte" Krümmung in ihrer Längsrichtung aufweisen können, problemlos und kontrolliert aufeinandergesetzt und in der Mitte des Schornsteines zentriert werden können. Hierbei wird zwischen den planparallelen Stirnflächen der Enden aneinander anschließender Rohrabschnitte eine gleichmäßig dicke und dichte Klebefuge erzeugt, die außerdem von dem die Fuge umgebenden Klemmring geschützt wird, der die Bildung von Mörtelnasen nicht zuläßt. Der Klemmring übernimmt zugleich die zugfeste Verbindung der benachbarten Rohrabschnitte. Da eine beim Fertigungsprozeß eventuell entstandenen Krümmung der Rohre sich nach dem parallelen Abschneiden der Rohrenden im Stoßbereich nicht mehr auswirkt, können die einzelnen Rohrabschnitte wesentlich länger sein als bisher oder sogar Geschoßhöhe erreichen. Hierdurch wird die Anzahl der Stoßfugen und damit auch die Gefahr von Fugenrissen verringert, die ohnehin durch die gleichmäßige Dicke der Klebefuge schon sehr stark zurückgedrängt ist.

Um eine gute Zentrierung der Rohrabschnitte untereinander zu erreichen, kann das eine Ende eines jeden Rohrabschnittes mit einer kegelstumpfförmigen Ausfräsung und das andere Ende eines jeden Rohrabschnittes mit einer entsprechenden, kegelstumpfförmigen Abfräsung versehen werden, die in die Ausfräsung des benachbarten Rohrendes paßt. Durch den Fräsvorgang ist es möglich, eine sehr genaue Passung zu erreichen.

Besonders zweckmäßig ist es, wenn die äußere Umfangsrille parallel zu dem abgeschnittenen Ende verläuft und zugleich mit dem Abschneiden des benachbarten Rohrendes in die Außenfläche des Rohres eingefräst wird. In diese Umfangsrillen benachbarter Rohrenden können dann die nach innen gerichteten Vorsprünge des Klemmringes eingreifen, wodurch eine gleichmäßig dicke Mörtelfuge garantiert wird und aufeinanderfolgende Rohrabschnitte zugleich zugfest miteinander verbunden werden.

Am Klemmring können Befestigungsvorrichtungen zum Befestigen eines Tragmittels angeordnet sein, mit dem das Innenrohr am Schornsteinkopf gehalten und in den Schornstein abgelassen werden kann.

Eine bevorzugte Ausführungsform der Erfindung wird in der nachfolgenden Beschreibung und in den Zeichnungen an einem Ausführungsbeispiel näher erläutert. Es zeigt:
- Fig. 1: einen einschaligen Schornstein, der vom Schornsteinkopf aus mit einem keramischen Innenrohr versehen wird, in einem Vertikalschnitt,
- Fig. 2: eine Einzelheit der Fig. 1 in vergrößertem Maßstab, welche teilweise die Stoßfugen von drei aufeinanderfolgenden Rohrabschnitten des Innenrohres und deren Verbindung an den Stoßfugen mit Klemmringen zeigt,
- Fig. 3: einen der Rohrabschnitte des Innenrohres beim Abschneiden der Rohrenden und Einfräsen der äußeren Umfangsrillen in einer schematischen, perspektivischen Darstellung,
- Fig. 4: eine andere Ausführungsform der Rohrenden von zwei aufeinanderfolgenden Rohrabschnitten im Diametralschnitt in auseinandergezogener Stellung ohne Klemmring,
- Fig. 5: einen Klemmring zum Verbinden der gegeneinanderstoßenden Enden zweier Rohrabschnitte mit am Klemmring angeordneten Abstandhaltern,
- Fig. 6: den Gegenstand der Fig. 5 in einem Teilquerschnitt nach Linie VI-VI in vergrößertem Maßstab,
- Fig. 7: eine zweite Ausführungsform eines Klemmringes zum Verbinden der Rohrenden in einer perspektivischen Darstellung und
- Fig. 8: eine dritte Ausführungsform eines Klemmringes in einer perspektivischen Darstellung.

In der Zeichnung ist mit 10 ein einschaliger Schornstein bezeichnet, dessen Wangen 11 aus Formsteinen bestehen oder aus Ziegeln gemauert sein können. Um diesen Schornstein säure- und feuchtigkeitunempfindlich zu machen und ihn dadurch auch zum Abführen von Abgasen verwenden zu können, die eine niedrige Temperatur aufweisen und im Inneren 12 des Schornsteines kondensieren können, wird im Inneren 12 des Schornsteines ein keramisches Innenrohr 13 eingebaut, dessen Durchmesser d kleiner ist als der Innendurchmesser D des Schornsteines 10. Das Innenrohr 13 hat bei der hier dargestellten Ausführungsform einen kreisrunden Querschnitt; es kann aber auch quadratisch oder mehreckig sein, wobei die Kanten abgerundet sind.

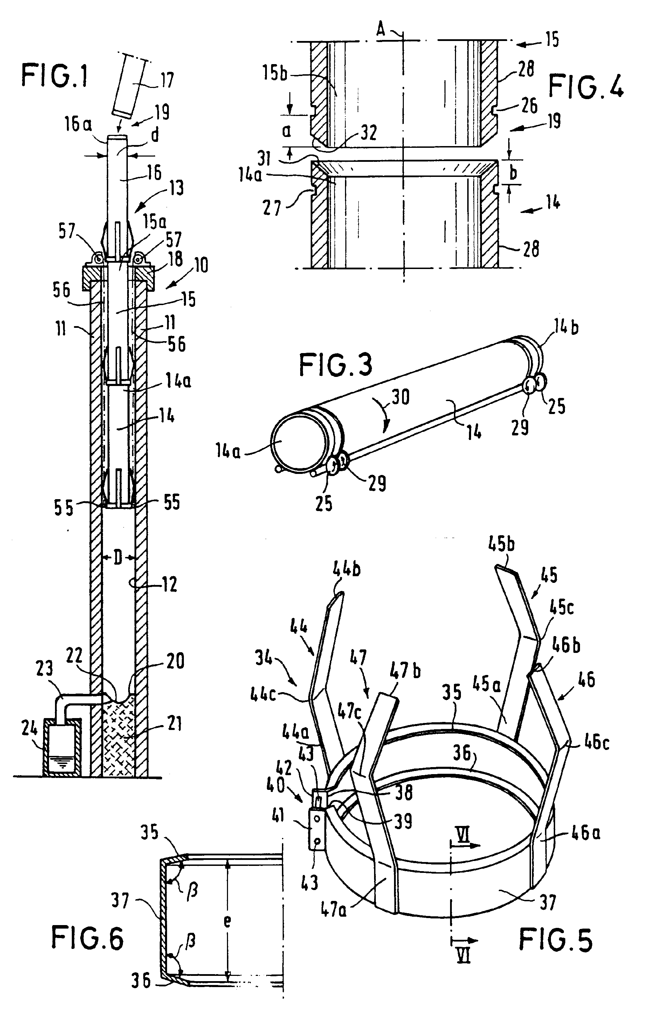

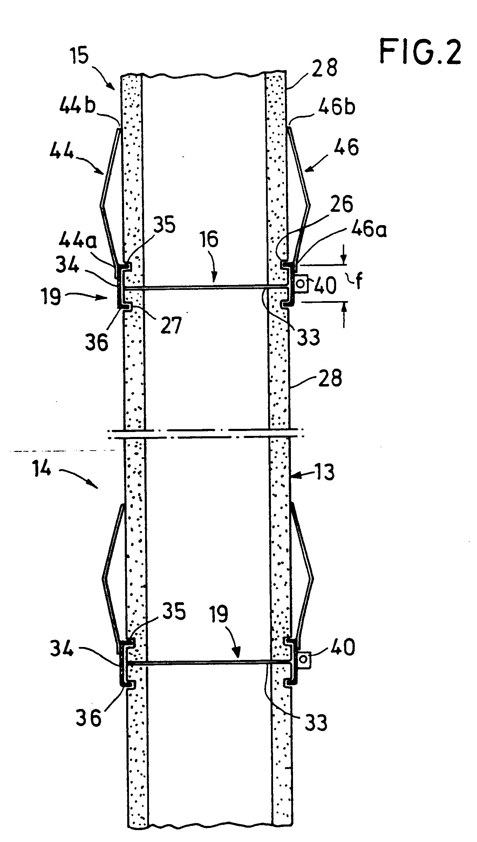

Wie aus Fig. 1 hervorgeht, besteht das Innenrohr 13 aus mehreren Rohrabschnitten 14, 15, 16 und 17, die eine Länge von etwa einem Meter oder mehr haben und die verhältnismäßig dünnwandig sind. Zur Anpassung an verschiedene Schornsteinhöhen gibt es auch kürzere Rohrabschnitte. Die Wandstärke beträgt etwa 8 bis 20 mm. Die Rohrabschnitte 14, 15, 16 und 17 werden oberhalb des Daches am Schornsteinkopf 18 einer auf den anderen gesetzt, an den Stoßfugen 19 miteinander verbunden und abschnittsweise vom Schornsteinkopf 18 aus ins Innere 12 des Schornsteins 10 mittels Seilwinden 57 abgelassen, bis der unterste Rohrabschnitt 14 sich auf dem Rand 20 der im Schornsteinsockel 21 eingeformten Kondensatsammelschale 22 aufsetzt. Von der Kondensatsammelschale 21 führt eine Leitung 23 zu einem Neutralisationsbehälter 24, der von Zeit zu Zeit geleert werden kann.

Um die Stoßfugen 19 zwischen den einzelnen Rohrabschnitten einfach und sicher abdichten zu können, werden die einzelnen Keramikrohrabschnitte 14 bis 17, die eine säurebeständige Innenfläche aufweisen, nach dem Brennen an ihren Enden 14a und 14b bzw. 15a und 15b bzw. 16a und 16b bzw. 17a und 17b planparallel abgeschnitten. Hierzu werden zweckmäßig rotierende Trennscheiben 25 verwendet, an denen der jeweilige Rohrabschnitt 14 bis 17 drehend entlangbewegt wird, während die Trennscheibenin Radialrichtung gegen den sich drehenden Rohrabschnitt vorgeschoben werden.

Gleichzeitig mit dem planparallelen Abschneiden der Rohrenden 14a und 14b wird im axialen Abstand a bzw. b vom abgeschnittenen Rohrende je eine äußere Umfangsrille 26 bzw. 27 in die Außenfläche 28 des Rohrabschnittes 14 bzw. 15 bzw. 16 bzw. 17 eingeschnitten. Diese Umfangsrillen 26 und 27 haben eine Tiefe von etwa 1 bis 2 mm und eine Breite von etwa 2 bis 3 mm und werden mit Frässcheiben 29 erzeugt, die ebenso wie die Trennscheiben 25 rotieren und gegen den Rohrabschnitt 14 vorgeschoben werden, während dieser sich um seine Längsachse in Richtung des Pfeiles 30 dreht.

In der Regel genügt es, die Rohrenden 14a und 14b bzw. 15a und 15b bzw. 16a und 16b bzw. 17a und 17b gerade, d.h. etwa rechtwinklig zur Rohrachse A abzuschneiden und die Rohrabschnitte dann stumpf aufeinanderzusetzen, wie dies in Fig. 2 gezeigt ist. Um eine einwandfreie Zentrierung der Rohrabschnitte 14 bis 17 zu erreichen, können diese aber auch an ihrem einen oberen Ende 14a mit einer kegelstumpfförmigen Ausfräsung 31 und an ihrem anderen, unteren Ende 15b mit einer entsprechenden, kegelstumpfförmigen Abfräsung 32 versehen werden, die in die Ausfräsung 31 des darunter angeordneten Rohrabschnittes 14 paßt.

Vor dem Aufeinandersetzen der Rohrabschnitte 14 und 15 bzw. 15 und 16 bzw. 16 und 17 wird auf die Schnittfläche bzw. Ausfräsung 31 am jeweils oberen Ende 14a bzw. 15a bzw. 16a des jeweils unteren Rohrabschnittes 14 bzw. 15 bzw. 16 ein säurebeständiges, erhärtendes Klebmittel, ein sogenannter "Säurekitt", aufgetragen, welcher die Rohrenden aufeinanderfolgender Rohrabschnitte nach dem Erhärten fest unddicht miteinander verbindet.

Um die Fugen zu sichern und schon gleich nach dem Zusammenfügen eine zugfeste Verbindung der einzelnen Rohrabschnitte 14, 15, 16 und 17 zu erreichen, wird vor oder nach dem Aufbringen des Säurekitts 33 um jede Stoßfuge 19 ein Klemmring 37 gelegt, dessen oberer Rand 35 und unterer Rand 36 sich fest in der Außenfläche 28 der Rohrabschnitte 14 bis 17 verkrallen.

Wie am besten aus den Fig. 5 und 6 hervorgeht, bestehen bei dem in den Fig. 1 bis 6 dargestellten Ausführungsbeispiel die Klemmringe 37 aus einem längs einer Erzeugenden aufgeschnittenen Ring, vorzugsweise aus Edelstahlblech, dessen oberer Rand 35 und dessen unterer Rand 36 nach innen umgebogen sind und der mit einer Vorrichtung 40 zur Durchmesserveränderung versehen ist. Bei dem dargestellten Ausführungsbeispiel besteht diese Vorrichtung 40 aus neben den Schnitträndern 38 und 39 angeordneten Bracken 41 und 42, die durch Schraubbolzen 43 miteinander verbunden sind und an denen der Klemmring 37 durch Einschrauben der Schraubbolzen 43 in ein Gewinde an einer der Bracken 42 und 43 zusammengezogen werden kann.

Wie aus Fig. 6 hervorgeht, schließen die nach innen umgebogenen Ränder 35 und 36 mit der Umfangswand des Klemmrings 37 einen stumpfen Winkel β ein. In Axialrichtung hat der obere Rand 35 vom unteren Rand 36 einen Abstand e, der etwa ebenso groß ist wie der Abstand f der Umfangsrillen 26 und 27 aufeinanderfolgender Rohrabschnitte 14 und 15, wenn in der Stoßfuge 19 der Säurekitt 33 eingebracht ist.

Der Klemmring 37 nimmt in seinem Inneren etwa nach außen gequetschten, überschüssigen Säurekitt 33 auf, wobei der untere Rand 36 des Klemmringes 37 den Säurekitt daran hindert, an der Außenfläche 28 des Innenrohres 13 entlang nach unten zu fliessen.

Um den oberen und unteren Rand 35 und 36 des Klemmringes 37 leichter nach innen biegen zu können, können diese Ränder 35 und 36 auch mit nicht näher dargestellten, radialen Einschnitten oder Kerben versehen sein.

Um das Innenrohr 13 im Inneren 12 des Schornsteines 10 zu zentrieren und im Abstand von der Innenwand des Schornsteins sicher festzuhalten, sind die Klemmringe 37 mit vier Abstandhaltern 44, 45, 46 und 47 versehen. Jeder Abstandhalter 44, 45, 46 und 47 wird von einer federnden Zunge aus Edelstahl gebildet, die mit ihrem unteren Ende 44a bzw. 45a bzw. 46a bzw. 47a durch Punktschweißung am Klemmring 37 befestigt ist und deren freies Ende 44b bzw. 45b bzw. 46b bzw. 47b an der Aussenfläche des Innenrohres 13 anliegt und die mit einem gebogenen oder abgewinkelten Rücken 44c bzw. 45c bzw. 46c bzw. 47c nach außen weist. Die Rücken der federnden Zungen liegen an der Innenwandung der Schornsteinwangen 11 des Schornsteins 10 an.

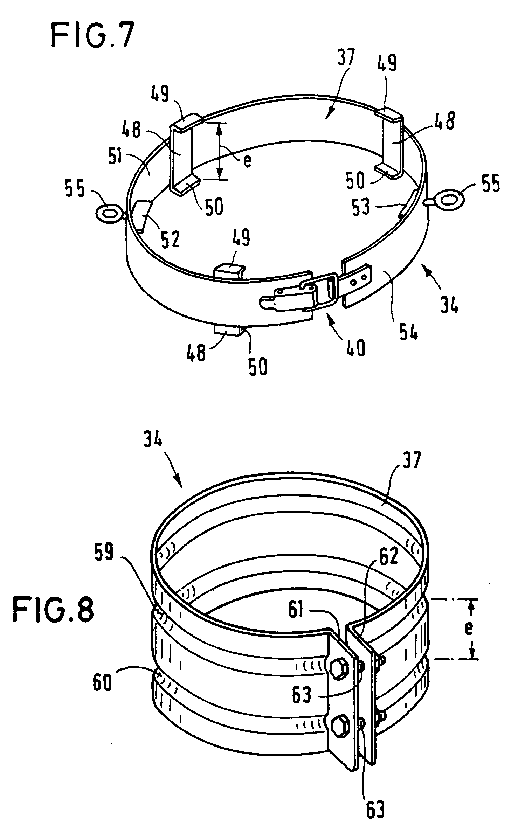

In Fig. 7 ist eine andere Ausführungsform eines Klemmringes gezeigt. Bei diesem Klemmring 37 sind auf der Innenseite drei U-förmige Bügel 48 beispielsweise durch Punktschweißung befestigt, die obere und untere, nach innen vorspringende Umfangsflanschabschnitte 49 und 50 haben, die in einem Abstand e voneinander angeordnet sind, der dem Abstand f der Umfangsrillen 26 und 27 an den gegeneinanderstoßenden Enden 14a und 15b aufeinanderfolgender Rohrabschnitte 14 und 15 entspricht. Auf der Innenfläche 51 des Klemmringes 37 sind an zwei diametral einander gegenüberliegenden Stellen etwa in der mittleren Diametralebene des Klemmringes 37 nach innen vorspringende Lappen 52 und 53 angeschweißt, welche in die Stoßfuge 29 zwischen zwei aneinander anschließenden Rohrabschnitten 14 und 15 bzw. 15 und 16 bzw. 16 und 17 eingreifen können, während die Umfangsflanschabschnitte 49 und 50 der Bügel 48 in den Umfangsrillen 26 und 27 liegen. Am Außenumfang 54 des Klemmringes 37 sind in der Nähe der Lappen 52 und 53 zwei Tragmittel 55 in Form von am Klemmring angeschweißten Ösen angeordnet, an denen Zugmittel, beispielsweise Drahtseile 56, befestigt werden können, die am Schornsteinkopf 18 auf Seiltrommeln 57 aufgewickelt sind und mit denen das Innenrohr 13 ins Innere 12 des Schornsteines 10 abgelassen werden kann (Fig. 1).

In Fig. 8 ist eine weitere Ausführungsform eines Klemmringes 37 darstellt. Die Umfangswand dieses Klemmringes 37 hat zwei nach innen gerichtete, eingeformte, umlaufende Sicken 59 und 60, deren Abstand e in Axialrichtung dem Abstand f der Rillen an den Enden aufeinanderfolgender Rohrabschnitte entspricht. Ebenso wie bei dem in den Fig. 5 und 6 dargestellten Ausfüh- rungsbeispiel hat auch der Klemmring nach Fig. 8 zwei nach außen vorstehende Bracken 61 und 62, an denen der Klemmring 37 mit einer oder mehreren Schrauben 63 zusammengezogen und in seinem Durchmesser verkleinert werden kann.

Obgleich dies in den Fig. 7 und 8 nicht dargestellt ist, können auch die hier gezeigten Klemmringe 37 mit Abstandhaltern 44 bis 47 versehen werden, wie sie bei dem Klemmring 37 in Fig. 5 gezeigt sind.

Beim Auskleiden des Schornsteines mit einem Innenrohr 13 wird so vorgegangen, daß zunächst am unteren Ende 14b des ersten Rohrabschnitts 14 ein nicht näher dargestellter Tragring oder ein Klemmring 37 befestigt wird, an dem Tragmittel 55 angeordnet sind. Diese Tragmittel können beispielsweise Ösen 55 sein, die, wie in Fig. 7 gezeigt, am Außenumfang des Klemmringes befestigt sind. An diesen Tragmitteln 55 werden dann Seile 56 als Zugmittel befestigt, die auf den Seiltrommeln 57 aufgewickelt sind, welche auf dem Schornsteinkopf 18 vorher in Stellung gebracht werden.

Der erste Rohrabschnitt 14 wird dann soweit ins Innere 12 des Schornsteins 10 abgelassen, daß sich sein oberer Rand 14a unmittelbar oberhalb des Schornsteinkopfes 18 befindet. Danach wird der nächste Klemmring 37 derart am oberen Rand 14 des ersten Rohrabschnittes 14 angebracht, daß sich der untere Rand 36 oder die untere Sicke 60 des Klemmringes 37 in die Umfangsrille 27 am oberen Rohrende 14a des Rohrabschnittes legt. Danach wird das Klebemittel, beispielsweise ein Säurekitt 33, auf die obere Stirnfläche am Rohrende 14a aufgebracht und der nächste Rohrabschnitt 15 mit seinem unteren Ende 15b auf das obere Ende 14a des ersten Rohrabschnittes 14 aufgesetzt, wobei der obere Rand 35 bzw. die obere Sicke 59 des Klemmringes 37 in die Umfangsrille 26 am unteren Ende 15b des Rohrabschnitts 15 hineingleitet. Der Klemmring 37 wird dann mit Hilfe der Vorrichtung 40 zur Durchmesserveränderung fest zusammengezogen, so daß die Rohrenden von dem Klemmring fest umschlossen und dicht zusammengehalten werden.

In diesem Zusammenhang ist darauf hinzuweisen, daß die auf der inneren Umfangsfläche des Klemmringes angebrachten Lappen 52 auf dem oberen Rand des jeweils unteren Rohrabschnittes aufliegen und ein Abrutschen des Klemmringes auch dann verhindern, wenn dieser den Rohrabschnitt noch mit Abstand umgibt, also noch nicht festgezogen ist.

Selbstverständlich ist es auch möglich, den Klemmring erst dann um die miteinander zu verbindenden Enden der Rohrabschnitte zu legen, wenn diese mit Mörtel aufeinandergesetzt wurden. Durch Spannen der Schraubbolzen 43 bzw. der Schrauben 63 wird dann der Klemmring 37 zusammengezogen, wodurch gleichzeitig beide Rohrabschnitte 14 und 15 in Axialrichtung zusammengespannt werden.

Anschließend wird das Innenrohr 13 um eine Rohrabschnittlänge weiter abgelassen, bis sich das obere Rohrende 15a des zweiten Rohrabschnitts 15 unmittelbar oberhalb des Schornsteinkopfes 18 befindet.

Das Aufsetzen und Verbinden der folgenden Rohrabschnitte vollzieht sich dann in analoger Weise, bis das gesamte Innenrohr 13 im Schornstein 10 angeordnet ist und sich der untere Rand 14b des untersten Rohrabschnitts 14 auf dem Rand 20 der Kondensatsammelschale 22 absetzt. Danach können die Seiltrommeln 57 entfernt werden und es kann eine Abdeckplatte auf den Schornsteinkopf 18 aufgesetzt werden, welche das obere Ende des aus dem Schornsteinkopf herausragenden Innenrohres festhält und in seiner Lage sichert.

## Patentansprüche

1. Keramisches Innenrohr (13) zum Auskleiden eines Schornsteines (10) mit einer säurebeständigen Innenfläche,das aus mehreren Rohrabschnitten (14-17) besteht, die am Schornsteinkopf (18) einer auf den anderen gesetzt, an ihren Stoßfugen (19) mit je einer, die jeweilige Stoßfuge (19) zwischen zwei Rohrabschnitten (14 - 17) überdeckenden Manschette (34) versehen und vom Schornsteinkopf (18) aus abschnittsweise in den Schornstein (10) abgelassen werden, **dadurch gekennzeichnet,** **daß** die Rohrabschnitte (14 bis 17) nach dem Brennen an ihren Enden (14a, 14b bis 17a, 17b) planparallel abgeschnitten und mit einer im Abstand vom Rohrende (14a, 14b) angeordneten äußeren Umfangsrille (26 bzw. 29) versehen werden, in die ein Klemmring (37) mit nach innen gerichteten, in axialem Abstand (e) voneinander angeordneten Vorsprüngen (35, 36 bzw. 48, 49 bzw. 59, 60) eingreift und daß zwischen den gegeneinanderstoßenden Enden (14a, 15b) aufeinanderfolgender Rohrabschnitte (14, 15) ein säurebeständiges, erhärtendes Klebemittel (33) angeordnet wird.

2. Keramisches Innenrohr nach Anspruch 1, **dadurch** **gekennzeichnet**, daß das eine Ende (14a) eines jeden Rohrabschnittes (14) mit einer kegelstumpfförmigen Ausfräsung (31) und das andere Ende (15b) eines jeden Rohrabschnittes (15) mit einer entsprechenden, kegelstumpfförmigen Abfräsung (32) versehen wird.

3. Keramisches Innenrohr nach Anspruch 1 oder 2, **da****durch gekennzeichnet, daß** die äußere Umfangsrille (26 bzw. 27) parallel zu dem abgeschnittenen Ende (14a bzw. 14b) verläuft und zugleich mit dem Abschneiden des benachbarten Rohrendes in die Außenfläche (28) des Rohres (14 bzw. 15 bzw. 16 bzw. 17) eingefräst wird.

4. Keramisches Innenrohr nach einem der Ansprüche 1 bis 3, **dadurch gekennzeichnet, daß** am Klemmring (37) Befestigungsvorrichtungen (55) zum Befestigen eines Tragmittels (56) angeordnet sind, mit dem das Innenrohr (13) am Schornsteinkopf (18) gehalten und in den Schornstein (10) abgelassen werden kann.

## Claims

1. Ceramic interior tube (13) for lining a chimney stack (10) with an acid-resistant interior surface, comprising several tube sections (14 - 17) which are placed on top of each other at the chimney head (18), fitted with a sleeve (34) at the butt joints (19) in such a manner that each butt joint (19) between two tube sections (14 - 17) is covered by such sleeve, and then lowered into the chimney stack (10) in sections from the chimney head (18), **charac****terized in** that the tube sections (14 - 17) are cut after the firing process so to exhibit plane-parallel ends (14a, 14b to 17a, 17b) and are furthermore provided with an exterior circumferential groove (26 or 29, respectively) located at a distance from the tube end (14a, 14b), said groove engaging with a clamping ring (37) which carries a plurality of inwardly extending projections (35,36 or 48,49 or 59,60, respectively) axially spaced at a distance (e) from one another, and that an acid-resistant hardening adhesive compound (33) is placed between the abutting ends (14a, 15b) of successive tube sections (14,15).

2. Ceramic interior tube according to Claim 1, **char****acterized in** that one end (14a) of each tube section (14) exhibits a machined recess (31) in the form of a truncated cone, while the other end (15b) of each tube section (15) is machined to a corresponding truncated cone profile (32).

3. Ceramic interior tube according to any of Claims 1 or 2, **characterized in** that the exterior circumferential groove (26 or 27, respectively) extends in a direction parallel with the cut-off end (14a or 14b, respectively) and is machined into the exterior surface (28) of the tube (14 or 15 or 16 or 17, respectively) concurrently with the process of cutting off the adjacent tube end.

4. Ceramic interior tube according to any of Claims 1 through 3, **characterized in** that the clamping ring (37) is provided with attachment devices (55) for attaching a holding means (56) by which the interior tube (13) can be held at the chimney head (18) and lowered into the chimney stack (10).

## Revendications

1. Tube interne en céramique (13) destiné au garnissage d'une cheminée (10) avec une surface intérieure à l'épreuve des acides, se composant d'une pluralité de tronçons tubulaires (14-17) posés les uns sur les autres au couronnement (18) de la cheminée, dotés à leurs joints de bout (19) d'une manchette (34) couvrant chaque joint de bout (19) séparant deux tronçons tubulaires (14-17), et descendus par lots dans la cheminée (10) depuis le couronnement (18), caractérisé en ce que les tronçons tubulaires (14 à 17) sont tronçonnés à leurs extrémités (14a, 14b à 17a, 17b) après la cuisson, pour présenter des faces bien planes et parallèles, sont dotés d'une rainure périphérique extérieure (26 ou 29) pratiquée à distance de l'extrémité (14a, 14b) du tronçon, dans laquelle vient s'engager un collier de serrage (37) présentant des saillies (35, 36 ou 48, 49 ou 59, 60) dirigées vers l'intérieur et agencées à une distance axiale (e) l'une de l'autre, et en ce qu'un adhésif (33) durcissable et à l'épreuve des acides est incorporé entre les extrémités aboutées (14a, 15b) de tronçons tubulaires successifs (14, 15).

2. Tube interne en céramique suivant la revendication 1, caractérisé en qu'une extrémité (14a) de chaque tronçon tubulaire (14) présente une fraisure en dedans ou intérieure tronconique (31), et en ce que l'autre extrémité (15b) de chaque tronçon tubulaire (15) présente une fraisure en dehors ou extérieure (32) tronconique correspondante.

3. Tube interne en céramique suivant la revendication 1 ou 2, caractérisée en ce que la rainure périphérique extérieure (26 ou 27) est parallèle à l'extrémité tronçonnée (14a ou 14b), et est fraisée simultanément au tronçonnage de l'extrémité du tronçon voisin, dans la surface extérieure (28) du tube (14 ou 15 ou 16 ou 17).

4. Tube interne en céramique suivant l'une des revendications 1 à 3, caractérisé en ce que le collier de serrage (37) présente des dispositifs de fixation (55) pour fixer un organe de suspension (56) permettant de maintenir le tube interne (13) sur le couronnement de cheminée (18) et de le faire descendre dans la cheminée (10).
